# EUROPEAN PATENT APPLICATION

(11) **EP 4 560 198 A1**
(43) Date of publication of application: **28.05.2025**
(21) Application number: 23842819.7
(22) Date of filing: 04.07.2023
(51) Int. Cl.: F24C 1/00, A47J 27/16

(54) **COOKER**

(30) Priority: 21.07.2022 JP 2022116345
(71) Applicant: Panasonic Intellectual Property Management Co., Ltd., Kadoma-shi, Osaka 571-0057 (JP)
(72) Inventor: NOMURA, Shuhei, Kadoma-shi, Osaka 571-0057 (JP); NITTA, Hiroaki, Kadoma-shi, Osaka 571-0057 (JP)
(74) Representative: SSM Sandmair
(86) International application number: PCT/JP2023/024833
(87) International publication number: WO 2024/018894

(57) **Abstract**

A cooker includes a heating chamber operable to accommodate a heating target, a heating device, a temperature detector, and a control device. The heating device supplies a mixed heating medium, which is a mixture of heated water droplets and steam, to the heating chamber. The temperature detector acquires a temperature inside the heating chamber or a heating state of the heating target. The control device controls the heating device according to a control sequence. The control device controls the heating device according to the temperature inside the heating chamber or the heating state of the heating target, and adjusts at least one parameter included in the control sequence among a supply timing of the mixed heating medium, a water droplet quantity, and a mixing proportion between heated water droplets and steam.

## Description

### TECHNICAL FIELD

The present disclosure relates to a cooker.

### BACKGROUND ART

A cooker using steam or superheated steam has been provided. For example, PTL 1 discloses a heating method described below.
(1) Both or one of hot water and steam heated to 100°C or higher is continuously injected into a heating chamber in a semi-sealed space heated to the same temperature or higher to produce fine droplets and wet heat steam.
(2) The fine droplets and wet heat steam are substituted for air in the heating chamber, so that the heating chamber is filled with a gas component that has a composition with a humidity of 95% or more and an oxygen concentration of 1% or less, and that is held to a temperature range between 90°C and 180°C.
(3) The fine water droplets and wet heat steam apply continuous amplitude heating with a temperature difference of at least 10°C in the above temperature range to a heating target.

### Citation List

### Patent Literature

PTL 1: Unexamined Japanese Patent Publication No. 2004-358236

### SUMMARY OF THE INVENTION

An object of the present disclosure is to offer a cooker operable to improve taste and aroma of a food material.

A cooker according to one aspect of the present disclosure includes a heating chamber operable to accommodate a heating target, a heating device, a temperature detector, and a control device.

The heating device includes a steam generator. The steam generator includes a boiler, a water supply pump that supplies water to the boiler, and a heater that heats water inside the boiler. The steam generator supplies a mixed heating medium that is a mixture of heated water droplets and steam to the heating chamber. The temperature detector acquires a temperature inside the heating chamber or a heating state of the heating target. The control device controls the heating device according to a control sequence.

The control device controls the heating device according to the temperature inside the heating chamber or the heating state of the heating target, and adjusts at least one parameter included in the control sequence among a supply timing of the mixed heating medium, a water droplet quantity, and a mixing proportion between heated water droplets and steam.

The present disclosure improves taste and aroma of a food material.

### BRIEF DESCRIPTION OF DRAWINGS

FIG. 1 is a schematic front view of a cooker according to a first exemplary embodiment.
FIG. 2 is a schematic side view of the cooker according to the first exemplary embodiment.
FIG. 3 is a schematic diagram illustrating a configuration example of a boiler of the cooker according to the first exemplary embodiment.
FIG. 4 is a schematic diagram illustrating another configuration example of the boiler of the cooker according to the first exemplary embodiment.
FIG. 5 is a diagram illustrating a configuration of a control device of the cooker according to the first exemplary embodiment.
FIG. 6 is a diagram illustrating a temporal change of a temperature near a heating target according to a control sequence.
FIG. 7 is diagrams illustrating an upper surface (upper photo) and a lower surface (lower photo) of a sweet potato according to Comparison 1.
FIG. 8 is diagrams illustrating an upper surface (upper photo) and a lower surface (lower photo) of a sweet potato according to Example 1.
FIG. 9 is a diagram illustrating comparison between an aroma component in a sweet potato according to Example 2 and an aroma component in a sweet potato according to Comparison 2.
FIG. 10 is a diagram illustrating a configuration of a cooker according to a second exemplary embodiment of the present disclosure.

### DESCRIPTION OF EMBODIMENT

Exemplary embodiments of the present disclosure will be described below with reference to the drawings. However, for example, details of known issues are omitted. Same reference marks are given to the same or substantially the same configurations to omit duplicate description.

### (First exemplary embodiment)

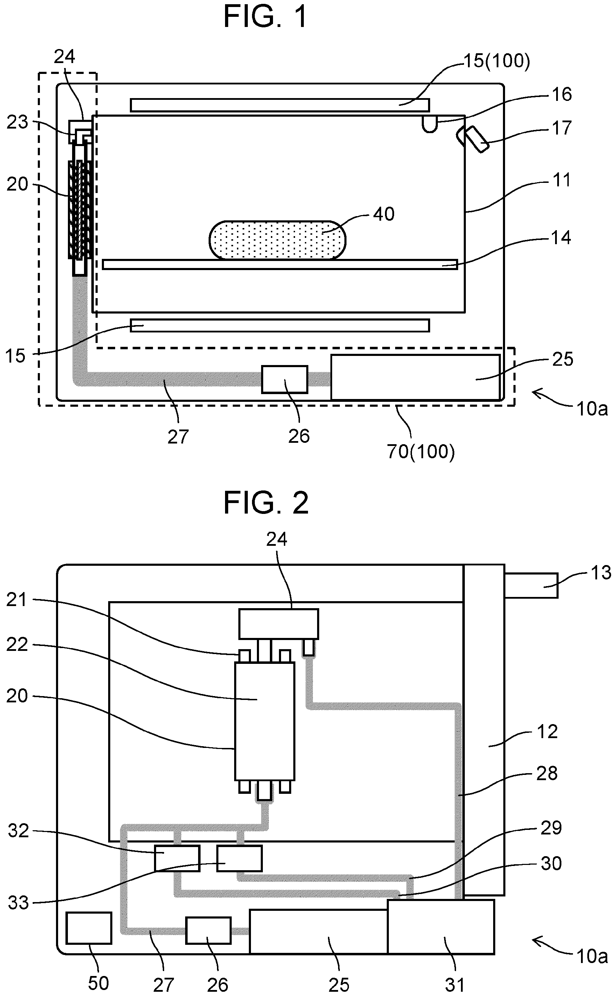

Cooker 10a according to a first exemplary embodiment of the present disclosure will be described with reference to FIGS. 1 to 9. Cooker 10a generates a mixture of heated water droplets and steam. Hereinafter, the mixture of heated water droplets and steam is referred to as a mixed heating medium. A mixing proportion between water droplets and steam in the mixed heating medium is referred to as the mixing proportion of the mixed heating medium or simply the mixing proportion.

Cooker 10a adjusts at least one of a supply timing of the mixed heating medium, a water droplet quantity, and the mixing proportion. As a result, cooker 10a controls a duration of moisture retained on a surface of a food material (hereinafter referred to as a moisture retention time).

By extending the moisture retention time while heating the food material, hydrolysis of components contained in the food material is promoted and thus low molecularization can be achieved. For example, protein becomes amino acid through low molecularization. Carbohydrate becomes reducing sugar through low molecularization. By forming low-molecular components, human can more easily recognize savoriness and sweetness.

The Maillard reaction of generated amino acid and reducing sugar and caramelization of reducing sugar are also promoted to produce aroma. As a result, taste and aroma of the food material are improved after heating.

### [1-1 Configuration]

FIGS. 1 and 2 are schematic diagrams illustrating a configuration of cooker 10a. FIG. 1 is a schematic front view of the configuration of cooker 10a. FIG. 2 is a schematic side view of the configuration of cooker 10a.

As illustrated in FIGS. 1 and 2, cooker 10a includes heating chamber 11, door 12, handle 13, cooking tray 14, oven heater 15, in-chamber temperature sensor 16, infrared sensor 17, and control device 50.

Heating chamber 11 is operable to accommodate heating target 40 such as a food material. Cooking tray 14 for placing heating target 40 is disposed inside heating chamber 11. Cooking tray 14 may be disposed in a height-adjustable manner inside heating chamber 11 or fixed inside heating chamber 11. Oven heater 15 is capable of radiation-heating inside heating chamber 11.

In-chamber temperature sensor 16 is disposed inside heating chamber 11 to detect a temperature inside heating chamber 11. Infrared sensor 17 detects infrared rays inside heating chamber 11 to detect a temperature near heating target 40. The temperature near heating target 40 refers to an ambient temperature of a surface or close to the surface of heating target 40. Control device 50 receives a detection result of in-chamber temperature sensor 16 and infrared sensor 17. In the present disclosure, infrared sensor 17 is equivalent to an object temperature sensor.

Further, cooker 10a includes boiler 20, heater 21, boiler temperature sensor 22, nozzle 23, nozzle cover 24, water supply tank 25, water supply pump 26, and water supply passage 27.

Water supply tank 25 is disposed below heating chamber 11, and stores water to be supplied to heating chamber 11. Water supply pump 26 is disposed between water supply tank 25 and boiler 20, and connects water supply tank 25 and boiler 20 via water supply passage 27. Boiler 20 is disposed on a an outer side wall of heating chamber 11. When water supply pump 26 is operated, water stored in water supply tank 25 is supplied to boiler 20 via water supply passage 27.

In the present exemplary embodiment, a component for generating the mixed heating medium is called steam generator 70. In other words, steam generator 70 includes boiler 20, heater 21, boiler temperature sensor 22, nozzle 23, nozzle cover 24, water supply tank 25, water supply pump 26, and water supply passage 27.

A component for heating inside heating chamber 11 is called heating device 100. In other words, heating device 100 includes steam generator 70 and oven heater 15.

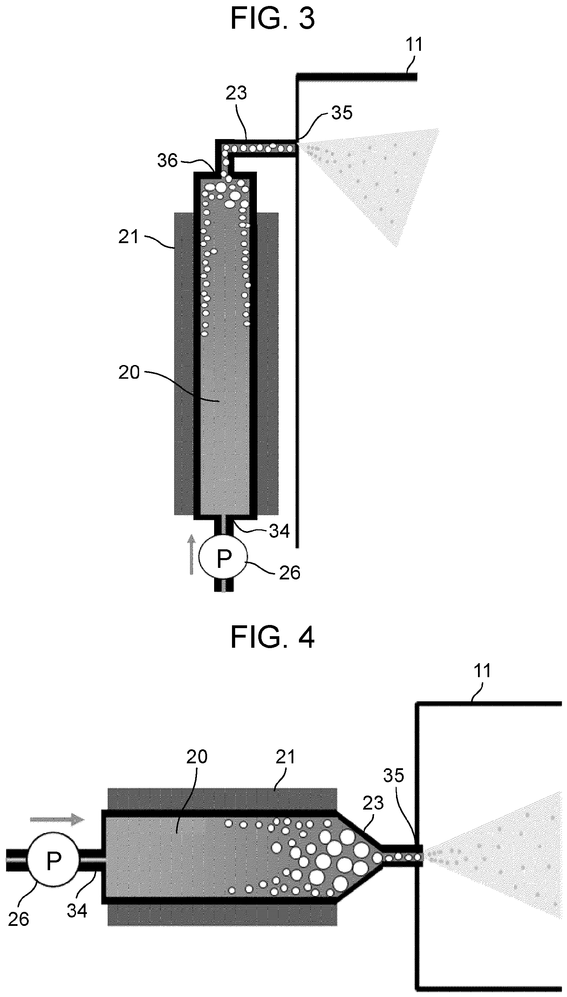

FIG. 3 is a schematic diagram illustrating a configuration example of boiler 20 in cooker 10a. As illustrated in FIG. 3, boiler 20 includes water inlet 34 and outlet 36 disposed on an opposite side of water inlet 34. Boiler 20 receives water supplied from water supply pump 26 through water inlet 34. Heater 21 is disposed in contact with boiler 20 to heat water inside boiler 20. As a result, the mixed heating medium is generated inside boiler 20.

Nozzle 23 is disposed on outlet 36 of boiler 20. Injection port 35 is provided at a tip of nozzle 23. Injection port 35 is disposed on a side wall of heating chamber 11 such that boiler 20 can communicate with heating chamber 11. The mixed heating medium generated in boiler 20 is supplied to heating chamber 11 from injection port 35 via nozzle 23.

Nozzle cover 24 covers nozzle 23 in order to prevent, as much as possible, leakage of the mixed heating medium to outside. Boiler temperature sensor 22 detects a temperature inside boiler 20. Control device 50 receives a detection result of boiler temperature sensor 22.

Further, cooker 10a includes, as illustrated in FIG. 2, first drain passage 28, second drain passage 29, third drain passage 30, drain tank 31, safety valve 32, and solenoid valve 33.

A part of the mixed heating medium may leak from nozzle 23. Leaked mixed heating medium is fed from nozzle cover 24 to drain tank 31 via first drain passage 28. When an inner pressure of boiler 20 is excessively increased, safety valve 32 activates to decrease the inner pressure of boiler 20. In this case, the mixed heating medium drained from boiler 20 is fed to drain tank 31 via third drain passage 30.

After stopping boiler 20, solenoid valve 33 is released. As a result, water remaining in boiler 20 is fed to drain tank 31 via second drain passage 29. Drain tank 31 stores drained water fed through first drain passage 28 to third drain passage 30.

As illustrated in FIG. 3, a cross-sectional area of injection port 35 of nozzle 23 is smaller than a cross-sectional area inside boiler 20. In other words, the inside of boiler 20 is a semi-sealed space. Thus, when heater 21 is operated, the inner pressure of boiler 20 increases, and the mixed heating medium generated inside boiler 20 is injected from nozzle 23 into heating chamber 11. Since the inner pressure of boiler 20 will be increased to higher than atmospheric pressure, a water boiling point becomes higher. Therefore, the mixed heating medium of a temperature higher than 100°C is generated.

Control device 50 adjusts a quantity and speed of water supplied from water inlet 34 to boiler 20, so as to adjust the mixing proportion of the mixed heating medium and an injection quantity and speed from nozzle 23.

FIG. 4 is a schematic diagram illustrating another configuration of boiler 20 in cooker 10a. As illustrated in FIG. 4, nozzle 23 may be a convergent nozzle whose nozzle diameter becomes smaller as a fluid flows in the nozzle.

Heating target 40 is heated by radiation heat from oven heater 15 and conduction heat from the mixed heating medium. Control device 50 controls heating of heating target 40 by controlling heating device 100 (oven heater 15 and steam generator 70) based on a temperature near heating target 40.

The inventors have found that taste and aroma of a food material are improved after heating by retaining moisture on the surface of the food material while heating the food material. Through low molecularization of protein and carbohydrate by hydrolysis, human can more easily recognize savoriness and sweetness of the food material. An aroma component is produced through the Maillard reaction and caramelization in low-molecular amino acid and reducing sugar.

Accordingly, by heating a food material while retaining moisture on the surface of the food material, hydrolysis of proteins and sugars is promoted. As a result, taste and aroma of the food material are improved. By heating of hydrolyzed food material at a temperature that promotes the Maillard reaction and caramelization, a larger amount of aroma component is produced, and thus aroma and flavor are improved.

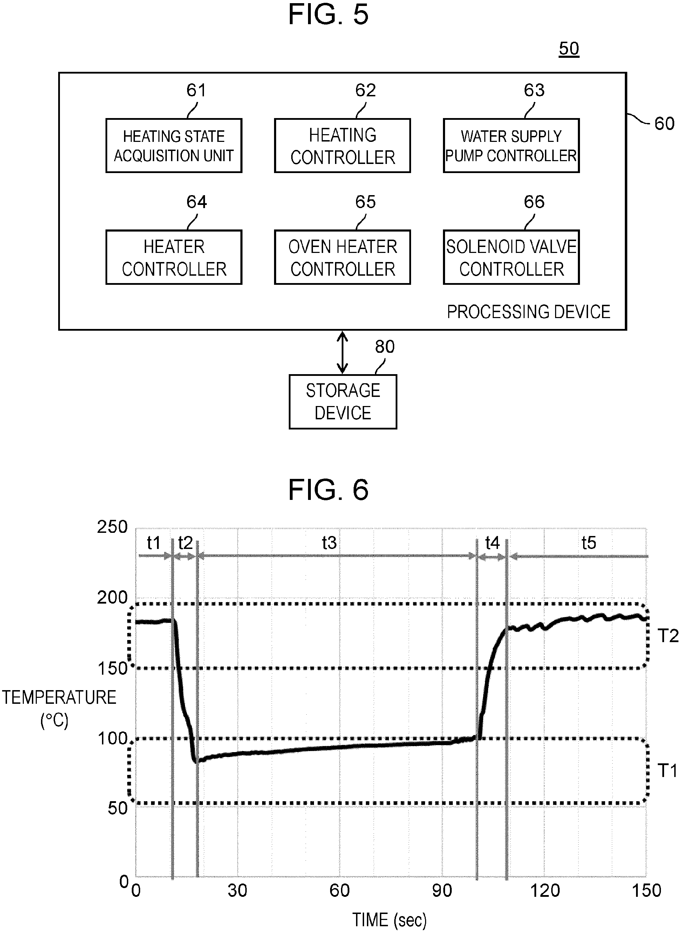

FIG. 5 illustrates a configuration of control device 50 of cooker 10a. As illustrated in FIG. 5, control device 50 includes processing device 60 and storage device 80.

Storage device 80 stores a program, data, and the like used by processing device 60. Storage device 80 may be a semiconductor memory or a hard disk. A control sequence described later is one type of data stored in storage device 80.

Processing device 60 includes heating state acquisition unit 61, heating controller 62, water supply pump controller 63, heater controller 64, oven heater controller 65, and solenoid valve controller 66. These components may be implemented by hardware such as a central processing unit and semiconductor memory of a computer and other integrated circuits, and software such as a program stored in a semiconductor memory of a computer and an external storage medium.

FIG. 5 illustrates functional blocks implemented by cooperation between hardware and software. A person skilled in the art can readily understand that these functional blocks may be implemented in various ways including only hardware and a combination of hardware and software.

Heating state acquisition unit 61 acquires a heating state of heating target 40. In the first exemplary embodiment, heating state acquisition unit 61 acquires a temperature near heating target 40 as an indicator of the heating state of heating target 40. When the temperature near heating target 40 is below 10°C, moisture is assumed to be present on the surface of heating target 40.

In the present exemplary embodiment, heating state acquisition unit 61 acquires the temperature near heating target 40 based on a detection result of infrared sensor 17 that can detect a temperature distribution. Heating state acquisition unit 61 may also estimate the temperature near heating target 40 based on a detection result of in-chamber temperature sensor 16.

More specifically, in control device 50, storage device 80 stores a correspondence relation between the detection result of in-chamber temperature sensor 16 and the temperature near heating target 40. The correspondence relation is data gained through experiments using a temperature sensor placed near the surface of heating target 40. Heating state acquisition unit 61 may estimate the temperature near heating target 40 from the detection result of in-chamber temperature sensor 16 based on this correspondence relation.

In control device 50, storage device 80 stores the correspondence relation between the detection result of in-chamber temperature sensor 16 and the temperature near heating target 40 according to a position of cooking tray 14 and a position, quantity, size, type, and so on of heating target 40. Heating state acquisition unit 61 may estimate the temperature near heating target 40 from the detection result of in-chamber temperature sensor 16 based on this correspondence relation.

Cooker 10a may include both infrared sensor 17 and in-chamber temperature sensor 16 or may include either one only. Cooker 10a may also use any other indirect or direct detection techniques to acquire the temperature near heating target 40.

Heating controller 62 acquires the control sequence prestored in storage device 80. The control sequence includes, as parameters, a supply timing of the mixed heating medium, a water droplet quantity, and a mixing proportion.

Heating controller 62 controls, according to the control sequence, water supply pump controller 63, heater controller 64, and oven heater controller 65, so as to adjust at least one parameter among the supply timing of the mixed heating medium, the water droplet quantity, and the mixing proportion. In this way, heating controller 62 controls the temperature near heating target 40.

Heating controller 62 may select an appropriate control sequence from control sequences stored in storage device 80 based on information from heating state acquisition unit 61.

Water supply pump controller 63 controls on and off of water supply pump 26, a water supply quantity by water supply pump 26, and the like. Heater controller 64 controls on and off of heater 21, a heating temperature of heater 21, and the like. Oven heater controller 65 controls on and off of oven heater 15, a heating temperature of oven heater 15, and the like. Solenoid valve controller 66 controls opening and closing of solenoid valve 33.

The water droplet quantity contained in the mixed heating medium or the mixing proportion is adjustable by the water supply quantity from water supply pump 26 and the temperature of heater 21. In control device 50, storage device 80 stores a correspondence relation obtained through prior experiments as data included in the control sequence. This correspondence relation associates the water droplet quantity contained in the mixed heating medium or the mixing proportion of the mixed heating medium with a predetermined water supply quantity of water supply pump 26 and a predetermined temperature of heater 21.

Heating controller 62 may control the water supply quantity of water supply pump 26 and the temperature of heater 21 according to the control sequence. This enables to achieve a desired water droplet quantity contained in the mixed heating medium or a desired mixing proportion of the mixed heating medium. The desired water droplet quantity or the desired mixing proportion includes 100% mixing proportion of steam, which means water droplets are completely vaporized.

To increase the temperature near heating target 40, heating controller 62 stops supplying the mixed heating medium or decreases the water droplet quantity contained in the mixed heating medium. To decrease the temperature near heating target 40, heating controller 62 starts supplying the mixed heating medium or increases the water droplet quantity contained in the mixed heating medium.

FIG. 6 illustrates a temporal change of the temperature near the heating target according to the control sequence. In FIG. 6, a horizontal axis is time (s) and a vertical axis is the temperature (°C) near the heating target.

As illustrated in FIG. 6, heating controller 62 controls heating device 100 according to the control sequence to change the temperature near heating target 40 to two or more different temperature ranges. The two or more temperature ranges include first temperature range T1 and second temperature range T1 higher than first temperature range T1 by 50°C or more.

First temperature range T1 may be a temperature range below 100°C. A lower limit of first temperature range T1 may be around 80°C or 90°C. In first temperature range T1, moisture on the surface of heating target 40 is retained. Therefore, hydrolysis of proteins and sugars contained in heating target 40 is promoted to improve taste of the food material after heating.

Second temperature range T2 may be a temperature range of 150°C or higher. A lower limit of second temperature range T2 may be any of 150°C, 160°C, 170°C, 180°C, 190°C, and 200°C. An upper limit of second temperature range T2 may be any of 200°C, 190°C, 180°C, 170°C, and 160°C. In second temperature range T2, the Maillard reaction and the like can be promoted. As a result, aroma and flavor of the food material are improved after heating.

In first period t1, heating controller 62 operates oven heater 15 to heat inside heating chamber 11. In this case, heating controller 62 maintains the temperature near heating target 40 in the second temperature range (approximately 180°C).

In second period t2, heating controller 62 injects the mixed heating medium to heating target 40 by causing water supply pump 26 to supply water to boiler 20 and heater 21 to generate the mixed heating medium. As a result, the temperature near heating target 40 decreases to the first temperature range of approximately below 100°C.

In third period t3, heating controller 62 controls water supply pump 26, heater 21, oven heater 15, and the like to maintain the temperature near heating target 40 in first temperature range T1 based on the temperature near heating target 40. As the temperature increases, proteins and carbohydrates in the food material are hydrolyzed.

In fourth period t4, heating controller 62 causes heater 21 to stop injecting the mixed heating medium. Since the inside of heating chamber 11 is heated by oven heater 15, the temperature near heating target 40 promptly increases when injection of the mixed heating medium is stopped, and the temperature shifts to the second temperature range (approximately 180°C).

In fifth period t5, heating controller 62 controls oven heater 15 to maintain the temperature near heating target 40 in second temperature range T2. As the temperature increases, the Maillard reaction and caramelization of amino acids and reducing sugars contained in the food material take place.

As described above, the control sequence preferably includes, at least once, a process of changing the temperature near heating target 40 from second temperature range T2 to first temperature range T1 and then changing it again from first temperature range T1 to second temperature range T2. As a result, both hydrolysis of proteins and carbohydrates in the food material and the Maillard reaction and caramelization of hydrolyzed amino acids and reducing sugars can be promoted.

Heating controller 62 may maintain the temperature of heating target 40 in one temperature range for 30 s or more. This enables to sufficiently promote hydrolysis, the Maillard reaction, and the like to improve taste and aroma of the food material after heating.

Heating controller 62 may intermittently supply the mixed heating medium to heating target 40 according to the heating state of heating target 40. Even when water droplets more than necessary are supplied to heating target 40, all the water droplets cannot adhere to the surface of heating target 40 and excess water droplets fall down.

The intermittent supply of the mixed heating medium enables to continuously supply a necessary amount of moisture to effectively extend the time of retaining moisture on the surface of heating target 40. In addition, a decrease in the temperature inside heating chamber 11 due to water droplets adhered to areas other than heating target 40 can be suppressed.

Heating controller may change the temperature near heating target 40 to one temperature range and then change to another temperature range within 30 s. For example, heating controller 62 may set second period t2 within 30 s to shift the temperature near heating target 40 from second temperature range T2 to first temperature range T1.

Heating controller 62 may set a fourth period within 30 s to shift the temperature near heating target 40 from first temperature range T1 to second temperature range T2. This enables to heat and cook the food material quickly.

In control device 50, storage device 80 stores the control sequence that adjusts at least one parameter among the supply timing of the mixed heating medium, the water droplet quantity, and the mixing proportion preset according to the type of heating target 40. Heating controller 62 controls heater 21, water supply pump 26, and boiler 20 according to the control sequence. As a result, heating target 40 can be heated according to the type of heating target 40 to improve taste and aroma of the food material.

Heating controller 62 adjusts a parameter included in the control sequence based on the temperature near heating target 40 acquired by heating state acquisition unit 61. As a result, heating target 40 can be heated in a further appropriate mode to improve the taste and aroma of the food material.

### [Example 1]

A sweet potato was heated using cooker 10a according to the first exemplary embodiment.

First, in heating of a sweet potato according to Comparison 1, heating chamber 11 was heated to 180°C by oven heater 15. At the same time, for two minutes immediately after stating heating, 25 cc/min of the mixed heating medium was supplied to heating chamber 11. Then, the supply of the mixed heating medium was stopped and heating chamber 11 was heated for 18 minutes only by oven heater 15. The total heating time is 20 minutes.

In heating of a sweet potato according to Example 1, heating chamber 11 was heated to 180°C by oven heater 15. At the same time, for one minute immediately after starting heating and for one minute after ten minutes from starting heating, in total of two minutes, 25 cc/min of the mixed heating medium was supplied to heating chamber 11. Other than these two minutes, heating chamber 11 was heated only by oven heater 15. The total heating time is 20 minutes.

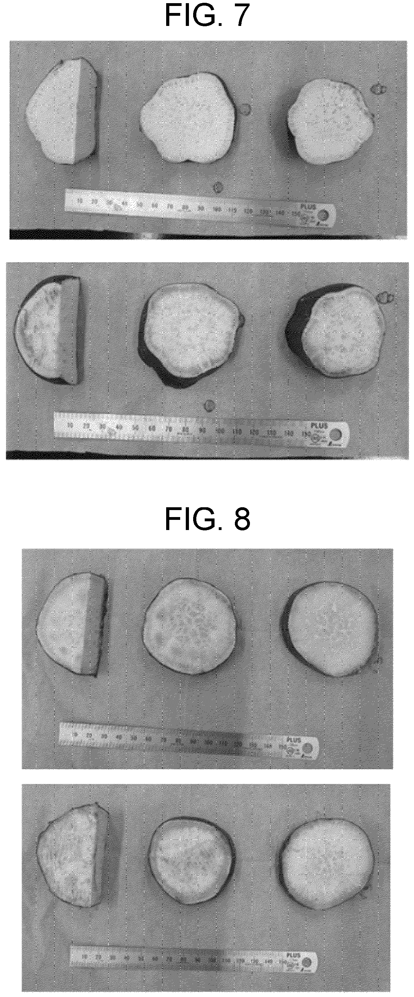

FIG. 7 shows an upper surface (upper photo) and a lower surface (lower photo) of the sweet potato heated in Comparison 1. In FIG. 7, the upper surface of the sweet potato looks whitish and dried compared to the lower surface. It can be assumed from the result that a difference in moisture distribution between the surface and inside of the sweet potato has increased by heating according to Comparison 1.

FIG. 8 shows an upper surface (upper photo) and a lower surface (lower photo) of the sweet potato heated in Example 1. In FIG. 8, the upper surface of the sweet potato looks slightly yellowish and moistened. It can be assumed from the result that a moisture distribution on the surface and inside became relatively uniform by heating according to Example 1.

Heating according to Example 1 achieved moistened cooking of the sweet potato compared to Comparison 1. This indicates that taste and aroma of cooked sweet potato have improved.

Next, in heating of a sweet potato according to Comparison 2, heating was performed at 200°C for 40 minutes using a conventional cooker employing steam.

In heating of a sweet potato according to Example 2, 30 cc/min of the mixed heating medium was supplied to heating chamber 11 for only one minute in every five minutes, using cooker 10a. At the same time, heating chamber 11 was heated at 200°C for 40 minutes by oven heater 15.

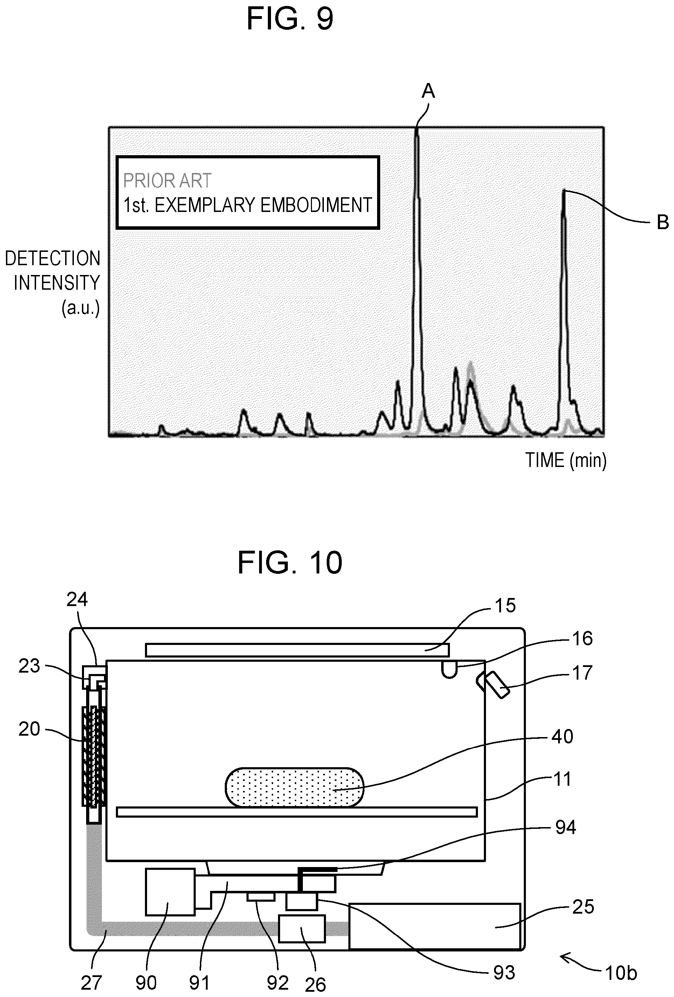

FIG. 9 illustrates comparison between an aroma component contained in the sweet potato heated according to Example 2 and an aroma component contained in the sweet potato heated according to Comparison 2. For the comparison, gas chromatography/mass spectrometry (GC/MS) is used.

In FIG. 9, a horizontal axis is time (min) and a vertical axis is a detection intensity (arbitrary unit) of the aroma component. A pale gray solid line indicates the aroma component in Comparison 2 and a dark black solid line indicates the aroma component in Example 2.

Peak A in Example 2 indicates that an aroma component of furfural having aroma similar to maple syrup, toast, roasted almond, coffee, or caramel has been largely produced. Peak B in Example 2 indicates that an aroma component of 2-furanmethanol that is an aroma component contained in coffee and the like has been largely produced.

Results in FIG. 9 reveal that the heating according to Example 2 has produced a large amount of aroma components compared to the heating according to Comparison 2. This tells that aroma and flavor have improved.

### [1-2. Operation]

The operation and action of cooker 10a will be described.

A user places heating target 40 on cooking tray 14, and selects a control sequence according to a type of heating target 40. Heating controller 62 reads the control sequence selected from storage device 80, and controls oven heater 15, water supply pump 26, and heater 21 according to the control sequence.

First, heating controller 62 heats inside heating chamber 11 to a predetermined temperature by oven heater 15. Next, heating controller 62 operates water supply pump 26 and heater 21 to inject the mixed heating medium to heating target 40. Heating state acquisition unit 61 acquires the temperature near heating target 40. Heating controller 62 controls water supply pump 26, heater 21, and oven heater 15 such that the temperature near heating target enters first temperature range T1.

Heating controller 62 stops water supply pump 26 and heater 21 to stop injection of the mixed heating medium. Heating controller 62 controls oven heater 15 such that the temperature near heating target 40 enters second temperature range T2.

When the control sequence ends, heating controller 62 stops oven heater 15. Solenoid valve controller 66 opens solenoid valve 33 to drain water remaining in boiler 20.

### [1-3. Configuration and effect]

In the present exemplary embodiment, cooker 10a includes heating chamber 11 operable to accommodate heating target 40, heating device 100, the temperature detector, and control device 50.

Heating device 100 includes steam generator 70. Steam generator 70 includes boiler 20, water supply pump 26 that supplies water to boiler 20, and heater 21 that heats water inside boiler 20. Steam generator 70 supplies the mixed heating medium that is a mixture of heated water droplets and steam to heating chamber 11. The temperature detector acquires the temperature inside heating chamber 11 or the heating state of the heating target. Control device 50 controls heating device 100 according to the control sequence.

Control device 50 controls heating device 100 according to the temperature inside heating chamber 11 or the heating state of heating target 40, and adjusts at least one parameter included in the control sequence among the supply timing of the mixed heating medium, the water droplet quantity, and the mixing proportion between heated water droplets and steam. As result, taste and aroma of a food material are improved.

In the present exemplary embodiment, control device 50 controls the retention time of moisture on the surface of heating target 40 accommodated in heating chamber 11.

In the present exemplary embodiment, heating device 100 includes oven heater 15 in addition to steam generator 70. Control device 50 controls heating device 100 to heat inside heating chamber 11 by oven heater 15 that shares the mixed heating medium at 100°C or higher, or maintain heating chamber 11 at 100°C or higher by both steam generator 70 and oven heater 15.

In the present exemplary embodiment, control device 50 controls heating device 100 according to the control sequence to change the temperature near heating target 40 to two or more temperature ranges.

In the present exemplary embodiment, the two or more temperature ranges include the first temperature range and the second temperature range higher than the first temperature range by 50°C or more.

In the present exemplary embodiment, the control sequence includes, at least once, a process of changing the temperature near the heating target from the second temperature range to the first temperature range and then changing it again from the first temperature range to the second temperature range.

In the present exemplary embodiment, control device 50 may control the heating device according to the control sequence to maintain the temperature near the heating target in one of the two or more temperature ranges for 30 s or more.

In the present exemplary embodiment, a shift time from one temperature range of the two or more temperature ranges to another temperature range may be within 30 s.

Cooker 10a according to the present exemplary embodiment further includes the temperature detector. The temperature detector includes an object temperature sensor for detecting the temperature near heating target 40. As a result, taste and aroma of a food material are improved.

In the present exemplary embodiment, the object temperature sensor is infrared sensor 17.

In the present exemplary embodiment, the temperature detector includes in-chamber temperature sensor 16 that detects the in-chamber temperature of the heating chamber.

In the present exemplary embodiment, control device 50 estimates the temperature near heating target 40 based on the in-chamber temperature.

In the present exemplary embodiment, control device 50 holds the control sequence preset according to the type of heating target 40. The control sequence includes at least one parameter among the supply timing of the mixed heating medium, the water droplet quantity, and the mixing proportion between heated water droplets and steam. Control device 50 controls the heater, the water supply pump, and the boiler according to the control sequence. As a result taste and aroma of a food material are improved.

In the present exemplary embodiment, cooker 10a includes the temperature detector that detects the temperature near heating target 40. Control device 50 adjusts at least one parameter included in the control sequence based on a detection result of the temperature detector. As a result, taste and aroma of a food material are improved.

### (Second exemplary embodiment)

Hereinafter, cooker 10b according to a second exemplary embodiment of the present disclosure will be described with reference to FIG. 10. Only points that differ from the first exemplary embodiment will be described in the second exemplary embodiment.

### [2-1 Configuration]

FIG. 10 illustrates a configuration of cooker 10b. As illustrated in FIG. 10, cooker 10b includes microwave generator 90, waveguide 91, reflected wave detector 92, motor 93, and rotary antenna 94 for heating heating target 40 and acquiring a heating state of heating target 40.

Reflected wave detector 92 functions as a moisture detector for detecting a moisture amount inside heating target 40 or a moisture state on a surface of heating target 40, together with heating state acquisition unit 61 in control device 50. Other configurations and their operations in the second exemplary embodiment are the same as those in cooker 10a according to the first exemplary embodiment.

Microwave generator 90 is operable to generate a microwave. Waveguide 91 propagates the microwave to rotary antenna 94. Rotary antenna 94 emits the microwave to heating chamber 11. In the present exemplary embodiment, heating device 100 includes microwave generator 90 in addition to steam generator 70 and oven heater 15.

The microwave is emitted toward a direction of a tip of rotary antenna 94 being rotated by driving of motor 93, so as to perform dielectric heating of heating target 40.

A part of the microwave emitted from rotary antenna 94 is not absorbed by heating target 40, and propagates, as a reflected wave, toward microwave generator 90 via rotary antenna 94 and waveguide 91. Reflected wave detector 92 is configured with a directional coupler. Reflected wave detector 92 is disposed inside waveguide 91 to detect a magnitude of the reflected wave.

The microwave is more likely absorbed by heating target 40 as an amount of moisture adhered to the surface of heating target 40 increases, and thus the reflected wave decreases. Heating state acquisition unit 61 acquires the amount of moisture adhered to the surface of heating target 40 from the magnitude of the reflected wave detected by reflected wave detector 92, based on a correspondence relation obtained by prior experiments.

Heating controller 62 controls heating of heating target 40 based on the amount of moisture adhered to the surface of heating target 40 acquired by heating state acquisition unit 61.

### [2-2. Operation]

The operation and action of cooker 10b will be described.

A user places heating target 40 on cooking tray 14, and selects a control sequence according to a type of heating target 40. Heating controller 62 reads a control program of the control sequence selected from storage device 80, and controls oven heater 15, water supply pump 26, and heater 21 according to the control sequence.

First, heating controller 62 heats inside heating chamber 11 to a predetermined temperature by oven heater 15. Then, heating controller 62 operates water supply pump 26 and heater 21 to inject the mixed heating medium to heating target 40. Heating state acquisition unit 61 acquires the amount of moisture adhered to the surface of heating target 40. Heating controller 62 controls water supply pump 26, heater 21, and oven heater 15 such that the moisture on the surface of heating target 40 is continuously retained.

Heating controller 62 stops injection of the mixed heating medium by stopping water supply pump 26 and heater 21. Heating controller 62 controls oven heater 15 such that the temperature near heating target 40 enters the second temperature range.

When the control sequence ends, heating controller 62 stops oven heater 15. Solenoid valve controller 66 opens solenoid valve 33 to drain water remaining in boiler 20.

### [2-3. Configuration and effect]

In the present exemplary embodiment, cooker 10b includes the moisture detector (reflected wave detector 92 and heating state acquisition unit 61 in control device 50) for detecting the moisture amount inside heating target 40 or the moisture state on the surface of heating target 40. Control device 50 adjusts at least one parameter included in the control sequence based on the detection result of the moisture detector. As a result, taste and aroma of a food material are improved.

### INDUSTRIAL APPLICABILITY

The present disclosure is applicable to cookers.

### REFERENCE MARKS IN THE DRAWINGS

- 10a, 10b: cooker
- 11: heating chamber
- 12: door
- 13: handle
- 14: cooking tray
- 15: oven heater
- 16: in-chamber temperature sensor
- 17: infrared sensor
- 20: boiler
- 21: heater
- 22: boiler temperature sensor
- 23: nozzle
- 24: nozzle cover
- 25: water supply tank
- 26: water supply pump
- 27: water supply passage
- 28: first drain passage
- 29: second drain passage
- 30: third drain passage
- 31: drain tank
- 32: safety valve
- 33: solenoid valve
- 34: supply inlet
- 35: injection port
- 36: outlet
- 40: heating target
- 50: control device
- 60: processing device
- 61: heating state acquisition unit
- 62: heating controller
- 63: water supply pump controller
- 64: heater controller
- 65: oven heater controller
- 66: solenoid valve controller
- 70: steam generator
- 80: storage device
- 90: microwave generator
- 91: waveguide
- 92: reflected wave detector
- 93: motor
- 94: rotary antenna
- 100: heating device

## Claims

1. A cooker comprising:
a heating chamber operable to accommodate a heating target;
a heating device including:
a boiler;
a water supply pump configured to supply water to the boiler; and
a heater configured to heat the water in the boiler
the heating device being configured to supply a mixed heating medium to the heating chamber, the mixed heating medium being a mixture of heated water droplets and steam;
a temperature detector configured to acquire a temperature inside the heating chamber or a heating state of the heating target; and
a control device configured to control the heating device according to a control sequence, wherein
the control device controls the heating device according to the temperature inside the heating chamber or the heating state of the heating target, and adjusts at least one parameter included in the control sequence among a supply timing of the mixed heating medium, a water droplet quantity, and a mixing proportion between the heated water droplets and the steam.

2. The cooker of claim 1, wherein
the control device controls a retention time of moisture on a surface of the heating target accommodated in the heating chamber.

3. The cooker of claim 2, wherein
the control device controls the heating device to retain the temperature inside the heating chamber at 100°C or higher.

4. The cooker of claim 1, wherein
the control device controls the heating device according to the control sequence to change a temperature near the heating target to two or more temperature ranges.

5. The cooker of claim 4, wherein
the two or more temperature ranges include a first temperature range and a second temperature range higher than the first temperature range by 50°C or more.

6. The cooker of claim 5, wherein
the control sequence includes, at least once, a process of changing the temperature near the heating target from the second temperature range to the first temperature range and then changing the temperature near the heating target again from the first temperature range to the second temperature range.

7. The cooker of claim 4, wherein
the control device controls the heating device according to the control sequence to maintain the temperature near the heating target in one temperature range of the two or more temperature ranges for 30 seconds or more.

8. The cooker of claim 4, wherein
a shift time from one temperature range to another temperature range of the two or more temperature ranges is within 30 seconds.

9. The cooker of claim 4, wherein
the temperature detector includes an object temperature sensor configured to detect the temperature near the heating target.

10. The cooker of claim 9, wherein
the object temperature sensor is an infrared sensor.

11. The cooker of claim 1, wherein
the temperature detector includes an in-chamber temperature sensor configured to detect an in-chamber temperature of the heating chamber.

12. The cooker of claim 11, wherein
the control device estimates a temperature near the heating target based on the in-chamber temperature.

13. The cooker of claim 1, further comprising a moisture detector configured to detect a moisture amount inside the heating target or a state of moisture on a surface of the heating target.

14. The cooker of claim 1, wherein
the control sequence is preset according to a type of the heating target, and
the control device stores the control sequence and controls the heating device according to the control sequence.

15. The cooker of claim 14, further comprising a temperature detector configured to detect a temperature near the heating target or a moisture detector configured to detect a moisture amount inside the heating target or a state of moisture on a surface of the heating target, wherein
the control device adjusts the at least one parameter included in the control sequence based on a detection result of the temperature detector or the moisture detector.
